# EUROPÄISCHE PATENTSCHRIFT

(11) **EP 3 685 057 B1**
(45) Veröffentlichungstag und Bekanntmachung des Hinweises auf die Patenterteilung: **10.08.2022**
(21) Anmeldenummer: 18765105.4
(22) Anmeldetag: 04.09.2018
(51) Int. Cl.: F16B 41/00, F16B 37/04, F16B 7/04

(54) **VERBINDER MIT FIXIERELEMENT FÜR ANBAUTEIL**
CONNECTOR WITH FIXING ELEMENT FOR ADD-ON PART
CONNECTEUR POURVU D'ÉLÉMENT DE FIXATION POUR PIÈCE RAPPORTÉE

(30) Priorität: 18.09.2017 EP 17191576
(43) Veröffentlichungstag der Anmeldung: 29.07.2020
(73) Patentinhaber: Hilti Aktiengesellschaft, 9494 Schaan (LI)
(72) Erfinder: MUELLER, Manuel, 9424 Rheineck (CH); MUNDWILER, Lukas, 9473 Gams (CH)
(74) Vertreter: Hilti Aktiengesellschaft Corporate Intellectual Property
(86) Internationale Anmeldenummer: PCT/EP2018/073669
(87) Internationale Veröffentlichungsnummer: WO 2019/052847

(56) Entgegenhaltungen:
- EP-A1- 2 405 147
- US-B2- 6 719 481

## Beschreibung

Die Erfindung betrifft einen Verbinder zum Verbinden eines eine Durchgangsöffnung aufweisenden Anbauteils mit einer einen Schienenschlitz aufweisenden Profilschiene, gemäss dem Oberbegriff des Anspruchs 1. Ein solcher Verbinder ist ausgestattet mit einem Hintergreifelement zum Verankern des Verbinders am Schienenschlitz der Profilschiene, und mit einem mit dem Hintergreifelement verbundenen Auflageelement zur Auflage auf dem Anbauteil in der Umgebung der Durchgangsöffnung des Anbauteils zum Begrenzen eines Weges des Verbinders durch die Durchgangsöffnung des Anbauteils. Die Erfindung betrifft ferner eine Befestigungsanordnung, welche solch einen Verbinder aufweist, gemäss Anspruch 15.

Die US6719481 B2 zeigt Anordnungen bestehend aus Profilschienen und Anbauteilen, welche mit den Profilschienen verbunden werden. Zum Verbinden sind separate, lose Verbinder vorgesehen, welche durch Durchgangsöffnungen in den Anbauteilen hindurch in die Profilschienen eingesteckt werden. Die Verbindungselemente weisen Hintergreifelemente auf, welche nach dem Einstecken in eine Verankerungsposition gebracht werden. Die Verbinder sichern dann die Anbauteile an den Profilschienen. Weitere Verbinder, welche durch Durchgangsöffnungen in Anbauteilen hindurch in Profilschienen eingesteckt werden, sind aus der DE102015118314 A1 und der DE102014110192 A1 bekannt. Verbinder, bei denen das Hintergreifelement durch Federwirkung von einer Einführposition in eine Verankerungsposition springt, sind aus der DE102009000786 A1 bekannt.

Die GB 1579941 A zeigt einen Winkel zum Verbinden zweier Profilschienen. An dem Winkel sind Hintergreifelemente dauerhaft angebracht, mit denen der Winkel an den beiden Profilschienen festlegbar ist.

Die EP2405147 A1 offenbart eine Befestigungsbaugruppe zur Befestigung eines Anbauteils, insbesondere eines Verkleidungsteils in einem Fahrzeuginnenraum, an einem Karosseriebauteil, mit einem Befestigungselement, das in einer Vormontageposition am Anbauteil befestigt werden kann und in einer Endmontageposition am Karosserieteil befestigt ist. Aufgabe der Erfindung ist es, einen Verbinder, der bei geringer Montagezeit und hoher Zuverlässigkeit bei geringem Aufwand eine besonders kostengünstige, schnelle und flexible Montage ermöglicht, sowie eine Befestigungsanordnung mit solch einem Verbinder anzugeben.

Die Aufgabe wird erfindungsgemäss durch einen Verbinder mit den Merkmalen des Anspruchs 1 und eine Befestigungsanordnung mit den Merkmalen des Anspruchs 15 gelöst. Bevorzugte Ausführungsformen des Verbinders sind in den abhängigen Ansprüchen angegeben.

Ein erfindungsgemässer Verbinder ist dadurch gekennzeichnet, dass der Verbinder zumindest ein Fixierelement aufweist, mittels welchem der Verbinder in einer Vormontageposition, in welcher der Verbinder die Durchgangsöffnung des Anbauteils, insbesondere mit seinem Hintergreifelement und/oder seinem Halsabschnitt, penetriert, am Anbauteil fixierbar ist, und dass das Fixierelement einen ringförmigen Rahmen aufweist, in welchem das Auflageelement aufgenommen ist.

Ein erster Grundgedanke der Erfindung kann darin gesehen werden, dass der Verbinder, welcher zum Verbinden der Montageschiene mit dem Anbauteil vorgesehen ist, zwar einerseits ein vom Anbauteil separates Teil ist, dass aber andererseits ein Fixierelement vorhanden ist, mittels welchem der an sich separate Verbinder zumindest temporär in der zum Herstellen der Verbindung mit der Profilschiene günstigen Vormontageposition am Anbauteil fixierbar ist. Hierdurch können einerseits die Vorteile eines integrierten Verbinders mit denen eines separaten Verbinders kombiniert werden: so kann wie bei einem integrierten Verbinder eine besonders einfache, schnelle und zuverlässige Montage des Verbinders an der Profilschiene möglich sein, da der Verbinder in der Vormontageposition sozusagen automatisch korrekt positioniert ist, während zugleich die für einen separaten Verbinder typische Flexibilität erhalten werden kann, die sich daraus ergibt, dass der Monteur den Verbinder je nach Anwendungsfall einfach an einer anderen Stelle positionieren kann. Darüber hinaus können durch das erfindungsgemässe Fixierelement Anwendungsgebiete erschlossen werden, die mit integrierten Verbindern einerseits oder völlig separaten Verbindern andererseits zumindest mit vertretbarem Herstellungsaufwand regelmässig nicht zugänglich sind, zum Beispiel Anwendungen an schlecht zugänglichen Orten und/oder an geometrisch komplexen Anbauteilen, insbesondere auch bei der Überkopfmontage. Da das Fixierelement erfindungsgemäss dem Verbinder zugeordnet ist, müssen ferner nach der Erfindung regelmässig nur so viele Fixierelemente vorgesehen werden, wie Verbinder vorhanden sind, was den Kostenaufwand noch weiter senken kann. Indem an Anbauteilen standardisierte Anschlüsse, beispielsweise standardisierte Durchgangsöffnungen, bereitgestellt werden, kann ein Monteur ein und denselben Verbinder an verschiedenen Anbauteilen verwenden, so dass das Einsatzspektrum nochmals vergrössert werden kann.

Der Schienenschlitz ist zweckmässigerweise zwischen zwei Schienenlippen der Profilschiene ausgebildet. Die Profilschiene kann insbesondere eine C-Profilschiene sein. Das Anbauteil kann beispielsweise ein Winkel oder ein Schienenfuss sein. Die Durchgangsöffnung im Anbauteil ist zweckmässigerweise so bemessen, dass das Hintergreifelement durch die Durchgangsöffnung hindurchtreten kann. Das Auflageelement ist zweckmässigerweise zumindest bereichsweise querschnittsgrösser als die Durchgangsöffnung im Anbauteil, so dass das Auflageelement in der Umgebung der Durchgangsöffnung auf dem Anbauteil zur Auflage kommen und so den Weg des Verbinders durch die Durchgangsöffnung begrenzen kann.

Das Anbauteil umgibt die Durchgangsöffnung zweckmässigerweise ringartig. Der hierbei vom Anbauteil gebildete Ring wird aus Lastgründen in der Regel geschlossen sein, wobei der Ring für besondere Anwendungen grundsätzlich auch offen sein könnte, das heisst bei besonderen Anwendungen kann das Anbauteil die Durchgangsöffnung zum Beispiel C-artig umgreifen. Die Durchgangsöffnung ist im Anbauteil gebildet. Die Durchgangsöffnung ist insbesondere für einen Durchgang des Verbinders vorgesehen. Die Durchgangsöffnung kann auch temporär verschlossen sein, beispielsweise mit einer vom Verbinder durchstossbaren Membran.

Das Hintergreifelement ist insbesondere länglich ausgeführt und insbesondere in einer ersten Dimension schmaler als der Schienenschlitz der Profilschiene und in einer zweiten Dimension breiter als der Schienenschlitz der Profilschiene ausgeführt. Somit kann das Hintergreifelement in einer Einführposition, in welcher die erste Dimension entlang der Breite des Schienenschlitzes ausgereichtet ist, durch den Schienenschlitz hindurch in den Innenraum der Profilschiene geführt werden. Durch anschliessendes Drehen des im Innenraum der Profilschiene angeordneten Hintergreifelements kann das Hintergreifelement in eine Verankerungsposition gebracht werden, in welcher die zweite Dimension entlang der Breite des Schienenschlitzes ausgereichtet ist und das Hintergreifelement den Schienenschlitz hintergreift, so dass das Hintergreifelement am Schienenschlitz verankert ist. Aufgrund der genannten Abmessungen kann das Hintergreifelement auch als Hammerkopfelement bezeichnet werden.

In der Vormontageposition penetriert der Verbinder die Durchgangsöffnung, das heisst der Verbinder tritt in der Vormontageposition zumindest in die Durchgangsöffnung ein und vorzugsweise tritt der Verbinder in der Vormontageposition durch die Durchgangsöffnung hindurch. Insbesondere können in der Vormontageposition das Auflageelement und das Hintergreifelement auf entgegengesetzten Seiten des Anbauteils angeordnet sein. Zweckmässigerweise befindet sich in der Vormontageposition des Verbinders das Hintergreifelement in der Einführposition des Hintergreifelements. An dem Anbauteil mit in der Vormontageposition fixiertem Verbinder kann die Profilschiene angesetzt werden und durch anschliessendes Verbringen des Hintergreifelements in die Verankerungsposition können das Anbauteil und die Profilschiene verbunden werden.

Das Auflageelement kann für eine mittelbare Auflage auf dem Anbauteil vorgesehen werden, beispielsweise über das Fixierelement hinweg. Besonders bevorzugt ist es aber, dass das Auflageelement für eine unmittelbare Auflage auf dem Anbauteil vorgesehen ist. Dies kann im Hinblick auf den Kraftfluss, insbesondere bei Langzeitanwendungen, vorteilhaft sein.

Das Hintergreifelement ist mit dem Auflageelement vorzugsweise über einen Halsabschnitt verbunden. Dieser Halsabschnitt ist insbesondere zum Durchführen durch die Durchgangsöffnung im Anbauteil und durch den Schienenschlitz in der Profilschiene vorgesehen. Die Vormontageposition zeichnet sich vorteilhafterweise dadurch aus, dass in ihr der Halsabschnitt die Durchgangsöffnung durchdringt. Der Halsabschnitt kann auch zumindest teilweise integral mit dem Hintergreifelement und/oder dem Auflageelement ausgeführt sein. Insbesondere kann der Halsabschnitt eine lokale Einschnürung des Verbinders bilden.

Besonders bevorzugt ist es, dass der Verbinder mittels des Fixierelements lösbar in der Vormontageposition am Anbauteil fixierbar ist. Unter "lösbar" kann in fachüblicher Weise insbesondere "zerstörungsfrei trennbar" verstanden werden. Gemäss dieser Ausführungsform kann das Fixierelement einfach je nach Bedarf versetzt werden, insbesondere ohne dass ein Austausch des Fixierelements erforderlich wäre, was die Handhabbarkeit und die Einsatzvielfalt noch weiter verbessern kann. Vorzugsweise kann vorgesehen werden, dass ein Verbund zwischen dem Verbinder und dem Fixierelement beim Lösen vom Anbauteil erhalten bleibt, dass also insbesondere das Fixierelement nicht am Anbauteil verbleibt, was eine besonders schnelle Neumontage ermöglicht. Durch das Anbieten von Anbauteilen mit vormontierten, aber lösbaren Verbindern, welche bei Bedarf durch den Monteur schnell und einfach räumlich versetzt werden können, wird bei besonders kurzen Montagezeiten eine besonders hohe Flexibilität gewährleistet.

Grundsätzlich könnte das Fixierelement integral mit einem Bestandteil des Verbinders ausgeführt sein, was herstellungstechnisch vorteilhaft sein kann, beispielsweise bei einer Ausführung als Stanzbiegeteil. Beispielsweise könnte das Fixierelement ein Schnapphaken sein, der integral mit dem Auflageelement ausgebildet ist. Besonders bevorzugt ist es jedoch, dass das Fixierelement ein separates Bauteil ist, insbesondere ein vom Verbinder separates Bauteil. Insbesondere kann das Fixierelement ein vom Auflageelement separates Bauteil sein. Hierdurch kann bei geringem Herstellungsaufwand ein besonders leistungsfähiger Verbinder erhalten werden, unter anderem weil für die verschiedenen Komponenten verschiedene, für den jeweiligen Einsatzzweck besonders geeignete Werkstoffe verwendet werden können.

Zweckmässigerweise ist das Fixierelement, vorzugsweise unmittelbar, am Auflageelement angeordnet. Die Fixierung des Verbinders am Anbauteil erfolgt also am Auflageelement des Verbinders. Da das Auflageelement ohnehin für eine Wechselwirkung mit dem Anbauteil vorgesehen ist, kann hierdurch der Verbinder und/oder das Fixierelement konstruktiv besonders einfach gestaltet werden. Diese Ausführungsform kann insbesondere beinhalten, dass der Verbinder mittels des Fixierelements am Auflageelement in der Vormontageposition am Anbauteil fixierbar ist.

Insbesondere kann vorgesehen werden, dass das Auflageelement in der Vormontageposition auf dem Anbauteil aufliegt, vorzugsweise unmittelbar aufliegt. Dies kann die Handhabbarkeit noch weiter verbessern, da das Auflageelement schon in der Vormontageposition dort angeordnet ist, wo es sich auch nach Abschluss des Montagevorgangs befindet. Insbesondere kann also das Fixierelement in der Vormontageposition gegen ein Abheben des Auflageelements vom Anbauteil wirken.

Beispielsweise könnte das Fixierelement ein am Verbinder angeordneter Magnet sein, welcher das Anbauteil anzieht. Besonders bevorzugt ist es aber, dass das Fixierelement einen Schnappmechanismus für das Anbauteil bildet. Unter einem Schnappmechanismus kann in fachüblicher Weise insbesondere ein Mechanismus mit einem Element, beispielsweise einem Schnapphaken, das beim Fixieren zunächst elastisch verdrängt wird und sich anschliessend verhakt, verstanden werden. Hierdurch ist eine besonders kostengünstige und zugleich einfache und zuverlässige Fixierung möglich.

Insbesondere kann vorgesehen werden, dass das Fixierelement einen an der Durchgangsöffnung des Anbauteils wirkenden Schnappmechanismus für das Anbauteil bildet. In diesem Fall greift das Fixierelement im Bereich der Durchgangsöffnung des Anbauteils am Anbauteil an. Da demgemäss die Durchgangsöffnung zur Fixierung des Verbinders in der Vormontageposition beitragen kann, hat die Durchgangsöffnung eine Doppelfunktion inne, und das System kann noch einfacher ausgestaltet werden. Vorzugsweise kann vorgesehen werden, dass der Schnappmechanismus für das Anbauteil und/oder der zumindest eine Schnapphaken in der Vormontageposition die Durchgangsöffnung durchgreift.

Alternativ oder zusätzlich kann vorgesehen sein, dass das Fixierelement einen Schnappmechanismus für das Auflageelement bildet. Demgemäss kann das Fixierelement mit dem Anbauteil verrastet werden, was den Aufwand noch weiter reduzieren kann.

Wie schon zuvor erwähnt kann es besonders vorteilhaft sein, dass das Fixierelement zumindest einen Schnapphaken aufweist. Hierdurch ist eine besonders günstige, einfache und zuverlässige Fixierung in der Vormontageposition möglich. Der Schnapphaken ist vorzugsweise ein Biegeschnapphaken und/oder besteht vorzugsweise aus Kunststoff. Der zumindest eine Schnapphaken kann den Schnappmechanismus für das Anbauteil bilden. Am Schnapphaken kann auch ein Raststeg für das Auflageelement vorgesehen sein, so dass der Schnapphaken auch den Schnappmechanismus für das Auflageelement bilden kann.

Vorzugsweise weist das Fixierelement zumindest eine Fingermulde auf, also eine Mulde zur Aufnahme eines typischen menschlichen Fingers. Hierdurch ist eine besonders zuverlässige Installation möglich. Insbesondere kann bei Verbindern mit federbetätigtem Hintergreifelement gewährleistet werden, dass beim Fixieren des Verbinders nicht versehentlich der Federmechanismus des Hintergreifelements ausgelöst wird. Die zumindest eine Fingermulde ist zweckmässigerweise im Rahmen ausgebildet. Vorzugsweise sind zwei Fingermulden vorgesehen.

Besonders bevorzugt ist es, dass die Fingermulde über dem Schnapphaken angeordnet ist, also insbesondere auf einer fiktiven Verlängerung des Schnapphakens. Da sich somit der Schnapphaken direkt unter der Fingermulde befindet, kann auf die Fingermulde ausgeübter Druck direkt auf den Schnapphaken übertragen werden, insbesondere ohne das Fixierelement zu verwinden, was die Zuverlässigkeit weiter steigern kann.

Zweckmässigerweise weist das Auflageelement zumindest eine Einbuchtung zum Aufnehmen des Schnapphakens auf. Hierdurch kann das Fixierelement in besonders einfacher und zuverlässiger Weise am Auflageelement positioniert werden. Die Einbuchtung kann vorzugsweise auch als Sichtfenster zum Prüfen der Lage des Hintergreifelements dienen.

Erfindungsgemäss weist das Fixierelement einen ringförmigen, vorzugsweise geschlossen ringförmigen, Rahmen auf, wobei das Auflageelement im Rahmen aufgenommen ist. Das Auflageelement ist also im Rahmen eingebettet. Hierdurch kann eine besonders einfache und zuverlässige Verbindung zwischen Fixierelement und Auflageelement geschaffen werden. Sofern zumindest eine Fingermulde vorgesehen ist, ist diese vorzugsweise im Rahmen vorgesehen. Sofern zumindest ein Schnapphaken vorgesehen ist, ist dieser vorzugsweise am Rahmen angeordnet und steht am Rahmen vor. Das Auflageelement liegt vorzugsweise am Rahmen an, insbesondere spielfrei, was eine noch bessere Handhabbarkeit ermöglicht.

Insbesondere kann vorgesehen sein, dass das Fixierelement zwei Schnapphaken aufweist, die auf entgegengesetzten Seiten des Rahmens angeordnet sind. Mit einer solchen Anordnung kann in besonders einfacher Weise eine Entriegelungsfunktion der Schnapphaken vom Anbauteil realisiert werden, bei der die Schnapphaken bei Zug am Rahmen aus einer Verriegelungsposition so ausschwenken, dass die Fixierung des Verbinders aus der Vormontageposition gelöst werden kann. Besonders zweckmässig ist es, dass die beiden Schnapphaken auf einer Linie angeordnet sind, die längs des - insbesondere in der Einführposition - befindlichen - Hintergreifelements verläuft, was konstruktiv und im Hinblick auf den Kraftfluss besonders vorteilhaft sein kann. Zweckmässigerweise weisen beide Schnapphaken jeweils einen Raststeg für das Auflageelement auf. Diese Raststege können einerseits die Schnappverbindung mit dem Auflageelement bilden und andererseits jeweils eine Schwenkachse definieren, um welche die die Schnapphaken bei Zug am Rahmen aus der Verriegelungsposition ausschwenken.

Besonders bevorzugt ist es, dass der Verbinder einen Mechanismus zum Reduzieren einer Haltekraft des Schnappmechanismus des Fixierelements für das Anbauteil aufweist. Insbesondere kann der Schnappmechanismus für das Anbauteil somit beim Transport eine hohe Haltekraft aufweisen, und zum Lösen des Verbinders vom Anbauteil kann die Haltekraft gezielt reduziert werden. Der Mechanismus zum Reduzieren der Haltekraft des Schnappmechanismus für das Anbauteil kann insbesondere wie zuvor beschrieben realisiert werden, also durch Schnapphaken, die bei Zug am Rahmen aus einer Verriegelungsposition ausschwenken.

Das Fixierelement kann vorzugsweise ein Kunststoffteil sein, was herstellungstechnische und funktionale Vorteile haben kann. Das Auflageelement und/oder das Hintergreifelement sind vorteilhafterweise Metallteile, welche als solche die auftretenden Kräfte besonders gut aufnehmen können.

Insbesondere kann vorgesehen werden, dass das Hintergreifelement relativ zum Auflageelement zwischen der Einführposition zum Einführen in den Schienenschlitz und der Verankerungsposition zum Hintergreifen des Schienenschlitzes schwenkbar ist. Bei einer solchen Art eines Verbinders erfolgt das Verankern des Verbinders durch Rotation des Hintergreifelements relativ zum Auflageelement. Insbesondere kann der Verbinder eine Feder aufweisen, welche das Hintergreifelement nach Betätigen eines Auslösemechanismus von der Einführposition in die Verankerungsposition drängt, was den Montageaufwand weiter reduzieren kann. Die Erfindung kann aber auch beispielsweise bei solchen Verbindern zum Einsatz kommen, bei denen das Hintergreifelement manuell relativ zum Auflageelement geschwenkt wird, oder grundsätzlich auch bei solchen Verbindern, bei denen das Hintergreifelement drehfest mit dem Auflageelement verbunden ist, und bei denen das Hintergreifelement gemeinsam mit dem Auflageelement aus der Einführposition in die Verankerungsposition geschwenkt wird.

Die Erfindung betrifft auch die bestimmungsgemässe Anwendung eines erfindungsgemässen Verbinders. Insbesondere betrifft die Erfindung eine Befestigungsanordnung mit einem eine Durchgangsöffnung aufweisenden Anbauteil, mit einem erfindungsgemässen Verbinder zum Verbinden des Anbauteils mit einer einen Schienenschlitz aufweisenden Profilschiene, und vorzugsweise mit dieser Profilschiene. Insbesondere kann bei der Befestigungsanordnung der Verbinder mittels des Fixierelements in der Vormontageposition des Verbinders am Anbauteil fixiert sein.

Merkmale, die im Zusammenhang mit dem erfindungsgemässen Verbinder erläutert werden, können auch bei der erfindungsgemässen Befestigungsanordnung zum Einsatz kommen, so wie auch umgekehrt Merkmale, die im Zusammenhang mit der erfindungsgemässen Befestigungsanordnung erläutert werden, auch beim erfindungsgemässen Verbinder zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung eines Verbinders, dessen Fixierelement fehlt;
- Figur 2:: eine perspektivische Darstellung eines erfindungsgemässen Fixierelements für den Verbinder aus Figur 1;
- Figur 3:: eine perspektivische Darstellung des Verbinders aus Figur 1 mit erfindungsgemäss montiertem Fixierelement gemäss Figur 2;
- Figur 4:: eine perspektivische Darstellung eines möglichen Anbauteils für den Verbinder aus Figur 3, wobei das Anbauteil als Schienenfuss ausgeführt ist;
- Figur 5:: eine perspektivische Darstellung einer Befestigungsanordnung mit einem Verbinder gemäss Figur 3, einem lediglich stark verkürzt dargestellten Beispiel eines Anbauteils, welches beispielsweise wie in Figur 4 dargestellt ausgeführt sein kann, und einer Profilschiene;
- Figur 6:: eine Ansicht der Befestigungsanordnung aus Figur 5 von vorne;
- Figur 7:: eine Seitenansicht des Verbinders aus Figur 3 und einem lediglich stark verkürzt dargestellten Beispiel eines Anbauteils vor dem Fixieren des Verbinders am Anbauteil;
- Figur 8: eine Ansicht entsprechend Figur 7 nach dem Fixieren des Verbinders in der Vormontageposition; und
- Figur 9:: eine Ansicht entsprechend Figur 8, wobei mit Punktlinie überlagert schematisch die Form des Fixierelements bei Zug in dessen Rahmen zum Lösen des Verbinders aus der Vormontageposition dargestellt ist.

Die Figuren zeigen ein Ausführungsbeispiel einer erfindungsgemässen Befestigungsanordnung beziehungsweise deren Bestandteile. Die Befestigungsanordnung weist eine Profilschiene 6, ein Anbauteil 5 sowie einen Verbinder 2 zum Befestigen des Anbauteils 5 an der Profilschiene 6 auf.

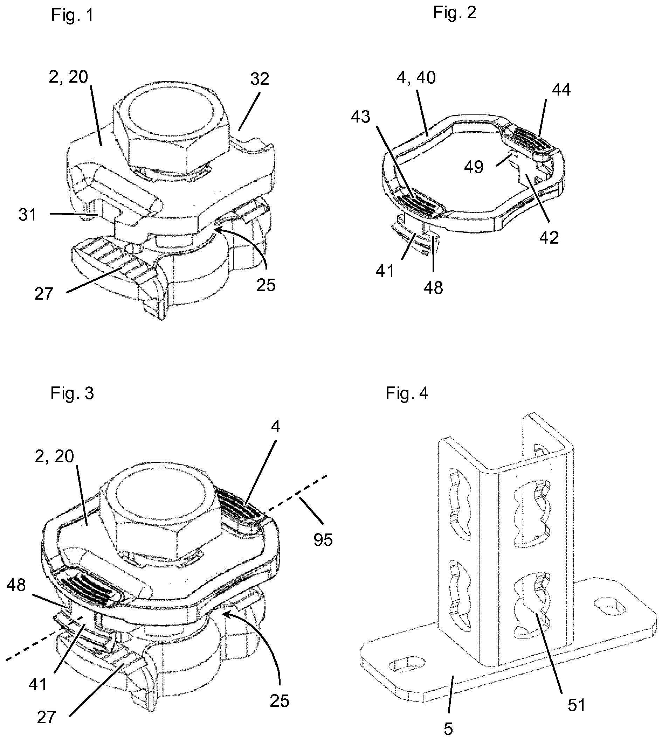

Eine mögliche Ausgestaltung des Anbauteils 5 ist im Detail in Figur 4 dargestellt. Das Anbauteil weist zumindest eine Durchgangsöffnung 51 auf, in welche der Verbinder 2 eingesteckt werden kann. Wie in Figur 4 gezeigt ist kann das Anbauteil 5 auch mehrere gleichartige Durchgangsöffnungen 51 für Verbinder 2 aufweisen. In diesem Fall kann das Anbauteil 5 mittels mehrerer Verbinder 2 an der Profilschiene 6 befestigt werden, und/oder der oder die Verbinder 2 kann beziehungsweise können am Anbauteil 5 für unterschiedliche Anwendungen räumlich umgesetzt werden. Gemäss Figur 4 ist das Anbauteil 5 als Schienenfuss ausgeführt. Es sind selbstverständlich aber auch andere Ausführungen des Anbauteils 5 möglich, soweit dieses eine oder mehrere Durchgangsöffnungen 51 für den Verbinder 2 aufweist.

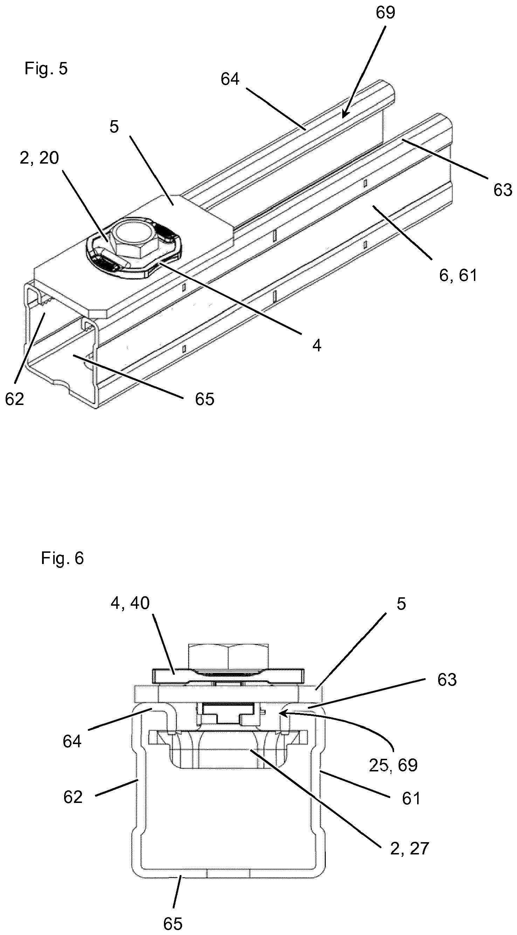

Details der Profilschiene 6 sind insbesondere in den Figuren 5 und 6 erkennbar. Die Profilschiene 6 weist einen längs der Profilschiene 6 verlaufenden Schienenschlitz 69 auf, durch den ein Zugang in den Innenraum der Profilschiene 6 möglich ist. Der Schienenschlitz 69 wird von zwei Schienenlippen 63 und 64 begrenzt, die eine Hinterschneidung bilden, an welcher ein weiter unten näher erläutertes Hintergreifelement 27 des Verbinders 2 formschlüssig festlegbar ist.

Im dargestellten Ausführungsbeispiel ist die Profilschiene 6 als C-Profilschiene ausgebildet und weist eine erste Seitenwand 61 und eine zweite Seitenwand 62 auf. Die erste Schienenlippe 63 ist oben an der ersten Seitenwand 61 angeordnet und steht von der ersten Seitenwand 61 zur zweiten Seitenwand 62 hin ab. Die zweite Schienenlippe 64 ist oben an der zweiten Seitenwand 62 angeordnet und steht von der zweiten Seitenwand 62 zur ersten Seitenwand 61 hin ab. Auf der Schienenunterseite sind die beiden Seitenwände 61 und 62 durch einen Schienenboden 65 verbunden. In der dargestellten Ausführungsform verlaufen die beiden Seitenwände 61 und 62 parallel zueinander und der Schienenboden 65 ist eben ausgeführt. Grundsätzlich sind aber auch andere Ausgestaltungen denkbar, beispielsweise mit einem V-förmigen Schienenboden.

Der Verbinder 2 weist ein Hintergreifelement 27 und ein Auflageelement 20 auf, wobei das Hintergreifelement 27 und das Auflageelement 20 über einen Halsabschnitt 25 des Verbinders 2 verbunden sind. Das Hintergreifelement 27 ist länglich ausgebildet und weist eine Breite auf, die kleiner als die Breite des Schienenschlitzes 69 ist, und eine Länge, die grösser als die Breite des Schienenschlitzes 69 ist. Somit kann das Hintergreifelement 27 durch den Schienenschlitz 69 hindurchgeschoben werden, wenn in einer Einführposition die Breite des Hintergreifelements 27 parallel zur Breite des Schienenschlitzes 69 verläuft. Wird das Hintergreifelement 27 dann im Innenraum der Profilschiene 6 um eine senkrecht zum Schienenschlitz 69 verlaufende Achse in eine Verankerungsposition gedreht, in welcher die Länge des Hintergreifelements 27 parallel zur Breite des Schienenschlitzes 69 verläuft, kann das Hintergreifelement 27 nicht mehr aus dem Schienenschlitz 69 herausgezogen werden, so dass das Hintergreifelement 27 und damit der Verbinder 2 an der Schiene verankert ist.

Die Durchgangsöffnung 51 im Anbauteil 5 ist so ausgeführt, dass das Hintergreifelement 27, zumindest in einer vorgegebenen Orientierung, und auch der Halsabschnitt 25, zumindest bereichsweise, durch die Durchgangsöffnung 51 durchgesteckt werden können, und zwar so weit, bis das Auflageelement 20 auf dem Anbauteil 5 zur Auflage kommt und damit ein noch tieferes Einstecken des Verbinders 2, das heisst den Weg des Verbinders 2, begrenzt.

Der Verbinder 2 weist ferner ein Fixierelement 4 auf. Dieses Fixierelement 4 weist einen ringförmigen Rahmen 40 auf, in dem bei zusammengefügtem Verbinder 2 das Auflageelement 20 eingebettet ist. Vorzugsweise korrespondiert der Innenquerschnitt des Rahmens 40 im wesentlichen mit dem Aussenquerschnitt des Auflageelements 20. Auf seiner Oberseite weist der Rahmen 40 zwei Fingermulden 43 und 44 auf, die an entgegengesetzten Enden des Rahmens 40 angeordnet sind. Das Fixierelement 4 weist ferner zwei Schnapphaken 41 und 42 auf. Diese Schnapphaken 41 und 42 sind, an entgegengesetzten Enden des Rahmens 40, an der Unterseite des Rahmens 40 angeordnet und stehen vom Rahmen nach unten vor. Insbesondere ist der ersten Schnapphaken 41 unterhalb der ersten Fingermulde 43 und der zweite Schnapphaken 42 unterhalb der zweiten Fingermulde 44 angeordnet. Im dargestellten Ausführungsbeispiel ist das Fixierelement 4 einstückig und als Kunststoffteil ausgebildet, das heisst insbesondere sind die Schnapphaken 41 und 42 integral mit dem Rahmen 40 ausgeführt. Dies ist aber nur als Beispiel zu verstehen, und es sind auch andere Ausgestaltungen möglich.

In dem, vorzugsweise metallischen, Auflageelement 20 sind zwei Einbuchtungen 31 und 32 vorgesehen, wobei jede dieser Einbuchtungen 31 und 32 jeweils einen Schnapphaken 41 beziehungsweise 42 aufnimmt.

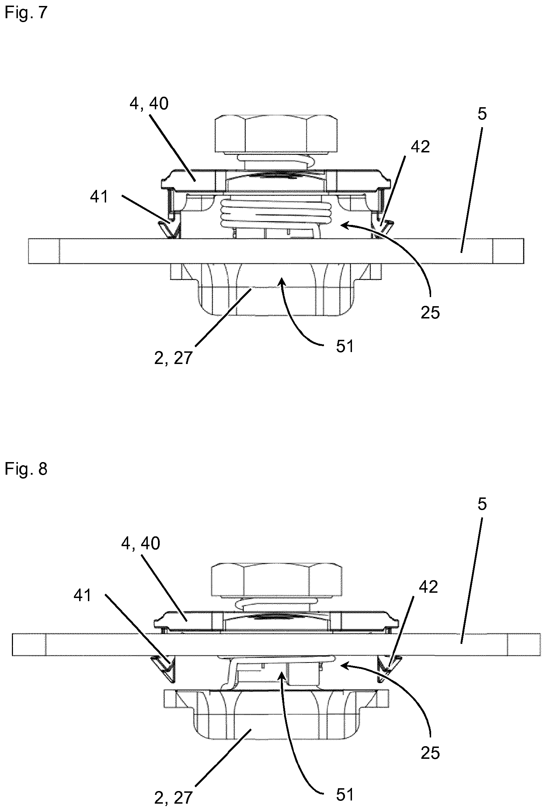

Im Betrieb wird der Verbinder 2 wie in Figur 7 gezeigt mit dem Hintergreifelement 27 voran in eine Durchgangsöffnung 51 im Anbauteil 5 eingesteckt. Sodann werden, insbesondere durch Druck auf die Fingermulden 43 und 44, die Schnapphaken 41 und 42 in die Durchgangsöffnung 51 eingedrückt, wo sie, wie in Figur 8 gezeigt, mit dem Anbauteil 5 verrasten und damit den Verbinder 2 in der Vormontageposition am Anbauteil 5 fixieren. Sodann wird das Anbauteil 5 mitsamt Verbinder 2 an der Profilschiene 6 angeordnet und das in der Einführposition befindliche Hintergreifelement 27 durch den Schienenschlitz 69 in den Innenraum der Profilschiene 6 gebracht, wo das Hintergreifelement 27 anschliessend in die Verankerungsposition gebracht wird und so das Anbauteil 5 mittels des Verbinders 2 an der Profilschiene 6 verankert wird.

Im dargestellten Ausführungsbeispiel ist das Hintergreifelement 27 federbetätigt und relativ zum Auflageelement 20 zwischen der Einführposition und der Verankerungsposition schwenkbar. Demgemäss sind im Halsabschnitt 25 eine Feder und eine Kulisse zum Definieren des Schwenkwegs angeordnet. Dies ist aber nur beispielhaft zu sehen. Grundsätzlich sind auch Ausführungsbeispiel ohne Federmechanismus denkbar oder auch solche, bei denen das Hintergreifelement 27 drehstarr am Auflageelement 20 angeordnet ist.

Wie insbesondere Figur 3 zeigt sind die Schnapphaken 41 und 42 auf einer Linie 95 angeordnet, die längs des sich in der Einführposition befindlichen Hintergreifelements 27 verläuft, was kräftemässig vorteilhaft sein kann. Grundsätzlich sind aber auch anderer Ausgestaltungen denkbar.

Das Fixierelement 4 weist auch einen Schnappmechanismus für das Auflageelement 20 auf. Dieser Schnappmechanismus für das Auflageelement 20 wird durch Raststege 48 und 49 gebildet, die am ersten Schnapphaken 41 beziehungsweise am zweiten Schnapphaken 42 angeordnet sind. Die Raststege 48 beziehungsweise 49 rasten an der dem Anbauteil 5 zugewandten Unterseite des Auflageelements 20 im Bereich der ersten Einbuchtung 31 beziehungsweise der zweiten Einbuchtung 32 ein.

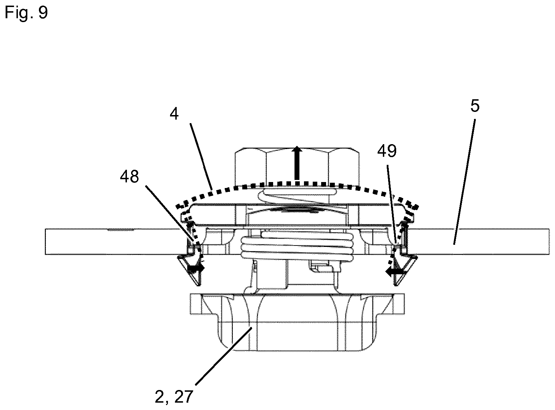

Das Fixierelement 4 stellt mit seinem durch die Schnapphaken 41 und 42 gebildeten Schnappmechanismus für das Anbauteil 5 hinreichend hohe Haltekräfte zur Verfügung, damit der Verbinder 2 bei den im Rahmen der Montage und vorzugsweise auch beim Transport einer Kombination aus Verbinder 2 und Anbauteil 5 typischerweise auftretenden Kräften zuverlässig in der Vormontageposition verbleibt. Es kann jedoch erforderlich werden, den Verbinder 2 wieder aus der Vormontageposition zu lösen, beispielsweise wenn der Verbinder 2 an einer anderen Durchgangsöffnung 51 desselben Anbauteils 5 oder eines anderen Anbauteils angeordnet werden soll. Dies ist über den in Figur 9 schematisch illustrierten Mechanismus zum Reduzieren einer Haltekraft des Schnappmechanismus für das Anbauteil 5 möglich: Wird nämlich seitlich am Rahmen 40, zwischen den beiden Fingermulden 43 und 44, eine vom Auflageelement 20 hinweg gerichtete Zugkraft auf den Rahmen 40 ausgeübt, so wölbt sich der Rahmen 40 wie in Figur 9 mit Punktlinien angedeutet auf, wobei die Schnapphaken 41 und 42, vorzugsweise an den Raststegen 48 beziehungsweise 49, schwenken und sich an ihren freien Enden zueinander hin und von der Wand der Durchgangsöffnung 51 hinweg bewegen und das Fixierelement 4 vom Anbauteil 5 freigeben.

## Patentansprüche

1. Verbinder (2) zum Verbinden eines eine Durchgangsöffnung (51) aufweisenden Anbauteils (5) mit einer einen Schienenschlitz (69) aufweisenden Profilschiene (6), mit
- einem Hintergreifelement (27) zum Verankern des Verbinders (2) am Schienenschlitz (69) der Profilschiene (6), und mit
- einem mit dem Hintergreifelement (27) verbundenen Auflageelement (20) zur Auflage auf dem Anbauteil (5) in der Umgebung der Durchgangsöffnung (51) des Anbauteils (5) zum Begrenzen eines Weges des Verbinders (2) durch die Durchgangsöffnung (51) des Anbauteils (5),
**dadurch gekennzeichnet,**
**dass** der Verbinder (2) zumindest ein Fixierelement (4) aufweist, mittels welchem der Verbinder (2) in einer Vormontageposition, in welcher der Verbinder die Durchgangsöffnung (51) des Anbauteils (5) penetriert, am Anbauteil (5) fixierbar ist, und
**dass** das Fixierelement (4) einen ringförmigen Rahmen (40) aufweist, in welchem das Auflageelement (20) aufgenommen ist.

2. Verbinder (2) nach Anspruch 1,
**dadurch gekennzeichnet,**
**dass** der Verbinder (2) mittels des Fixierelements (4) lösbar in der Vormontageposition am Anbauteil (5) fixierbar ist.

3. Verbinder (2) nach einem der vorstehenden Ansprüche,
**dadurch gekennzeichnet,**
**dass** das Fixierelement (4) ein separates Bauteil ist.

4. Verbinder (2) nach einem der vorstehenden Ansprüche,
**dadurch gekennzeichnet,**
**dass** das Fixierelement (4) am Auflageelement (20) angeordnet ist.

5. Verbinder (2) nach einem der vorstehenden Ansprüche,
**dadurch gekennzeichnet,**
**dass** das Auflageelement (20) in der Vormontageposition auf dem Anbauteil (5) aufliegt.

6. Verbinder (2) nach einem der vorstehenden Ansprüche,
**dadurch gekennzeichnet,**
**dass** das Fixierelement (4) einen an der Durchgangsöffnung (51) des Anbauteils (5) wirkenden Schnappmechanismus für das Anbauteil (5) bildet und/oder dass das Fixierelement (4) einen Schnappmechanismus für das Auflageelement (20) bildet.

7. Verbinder (2) nach einem der vorstehenden Ansprüche,
**dadurch gekennzeichnet,**
**dass** das Fixierelement (4) zumindest einen Schnapphaken (41, 42) aufweist.

8. Verbinder (2) nach einem der vorstehenden Ansprüche,
**dadurch gekennzeichnet,**
**dass** das Fixierelement (4) zumindest eine Fingermulde (43, 44) aufweist.

9. Verbinder (2) nach Anspruch 7 und 8,
**dadurch gekennzeichnet,**
**dass** die Fingermulde (43 oder 44) über dem Schnapphaken (41 beziehungsweise 42) angeordnet ist.

10. Verbinder (2) nach Anspruch 7 oder 9,
**dadurch gekennzeichnet,**
**dass** das Auflageelement (20) zumindest eine Einbuchtung (31 oder 32) zum Aufnehmen des Schnapphakens (41 beziehungsweise 42) aufweist.

11. Verbinder (2) nach einem der vorstehenden Ansprüche,
**dadurch gekennzeichnet,**
**dass** das Fixierelement (4) zwei Schnapphaken (41, 42) aufweist, die auf entgegengesetzten Seiten des Rahmens (40) angeordnet sind.

12. Verbinder (2) nach Anspruch 6,
**dadurch gekennzeichnet,**
der Verbinder (2) einen Mechanismus zum Reduzieren einer Haltekraft des Schnappmechanismus für das Anbauteil (5) aufweist.

13. Verbinder (2) nach einem der vorstehenden Ansprüche,
**dadurch gekennzeichnet,**
**dass** das Fixierelement (4) ein Kunststoffteil ist.

14. Verbinder (2) nach einem der vorstehenden Ansprüche,
**dadurch gekennzeichnet,**
**dass** das Hintergreifelement (27) relativ zum Auflageelement (20) zwischen einer Einführposition zum Einführen in den Schienenschlitz (69) und einer Verankerungsposition zum Hintergreifen des Schienenschlitzes (69) schwenkbar ist.

15. Befestigungsanordnung mit einem eine Durchgangsöffnung (51) aufweisenden Anbauteil (5), mit einem Verbinder (2) nach einem der vorstehenden Ansprüche zum Verbinden des Anbauteils (5) mit einer einen Schienenschlitz (69) aufweisenden Profilschiene (6), und vorzugsweise auch mit dieser Profilschiene (6).

## Claims

1. Connector (2) for connecting an attachment (5) having a through-opening (51) to a profile rail (6) having a rail slot (69), the connector comprising
- a rear-engagement element (27) for anchoring the connector (2) on the rail slot (69) of the profile rail (6), and comprising
- a contact element (20) which is connected to the rear-engagement element (27) and intended for resting on the attachment (5) in the vicinity of the through-opening (51) of the attachment (5) in order to limit a path of the connector (2) through the through-opening (51) of the attachment (5),
**characterized in that**
the connector (2) has at least one fixing element (4) by means of which the connector (2) can be fixed to the attachment (5) in a pre-assembly position in which the connector passes through the through-opening (51) of the attachment (5), and **in that** the fixing element (4) has an annular frame (40) in which the contact element (20) is received.

2. Connector (2) according to claim 1,
**characterized in that**
the connector (2) can be releasably fixed to the attachment (5) in the pre-assembly position by means of the fixing element (4).

3. Connector (2) according to either of the preceding claims,
**characterized in that**
the fixing element (4) is a separate component.

4. Connector (2) according to any of the preceding claims,
**characterized in that**
the fixing element (4) is arranged on the contact element (20).

5. Connector (2) according to any of the preceding claims,
**characterized in that**
in the pre-assembly position, the contact element (20) rests on the attachment (5).

6. Connector (2) according to any of the preceding claims,
**characterized in that**
the fixing element (4) forms a snap mechanism for the attachment (5), which snap mechanism acts on the through-opening (51) of the attachment (5), and/or
**in that** the fixing element (4) forms a snap mechanism for the contact element (20).

7. Connector (2) according to any of the preceding claims,
**characterized in that**
the fixing element (4) has at least one snap hook (41, 42).

8. Connector (2) according to any of the preceding claims,
**characterized in that**
the fixing element (4) has at least one finger grip (43, 44).

9. Connector (2) according to claim 7 and claim 8,
**characterized in that**
the finger grip (43 or 44) is arranged above the snap hook (41 or 42).

10. Connector (2) according to either claim 7 or claim 9,
**characterized in that**
the contact element (20) has at least one indentation (31 or 32) for receiving the snap hook (41 or 42).

11. Connector (2) according to any of the preceding claims,
**characterized in that**
the fixing element (4) has two snap hooks (41, 42) which are arranged on opposite sides of the frame (40).

12. Connector (2) according to claim 6,
**characterized in that**
the connector (2) has a mechanism for reducing a holding force of the snap mechanism for the attachment (5).

13. Connector (2) according to any of the preceding claims,
**characterized in that**
the fixing element (4) is a plastics part.

14. Connector (2) according to any of the preceding claims,
**characterized in that**
the rear-engagement element (27) can be pivoted, relative to the contact element (20), between an insertion position for insertion into the rail slot (69) and an anchoring position for engaging behind the rail slot (69).

15. Fastening arrangement comprising an attachment (5) having a through-opening (51), comprising a connector (2) according to any of the preceding claims for connecting the attachment (5) to a profile rail (6) having a rail slot (69), and preferably also comprising this profile rail (6).

## Revendications

1. Raccord (2) permettant de raccorder une pièce de montage (5) présentant une ouverture traversante (51) à un rail profilé (6) présentant une fente de rail (69), comportant
- un élément de mise en prise arrière (27) permettant d'ancrer le raccord (2) à la fente de rail (69) du rail profilé (6), et comportant
- un élément d'appui (20) relié à l'élément de mise en prise arrière (27) et permettant l'appui sur la pièce de montage (5) à proximité de l'ouverture traversante (51) de la pièce de montage (5) afin de limiter une course du raccord (2) à travers l'ouverture traversante (51) de la pièce de montage (5),
**caractérisé en ce**
**que** le raccord (2) présente au moins un élément de fixation (4) au moyen duquel le raccord (2) peut être fixé à la pièce de montage (5) dans une position de prémontage dans laquelle le raccord pénètre dans l'ouverture traversante (51) de la pièce de montage (5), et
**que** l'élément de fixation (4) présente un cadre (40) annulaire dans lequel est logé l'élément d'appui (20).

2. Raccord (2) selon la revendication 1,
**caractérisé en ce**
**que** le raccord (2) peut être fixé de manière amovible à la pièce de montage (5) dans la position de prémontage au moyen de l'élément de fixation (4).

3. Raccord (2) selon l'une des revendications précédentes,
**caractérisé en ce**
**que** l'élément de fixation (4) est une pièce séparée.

4. Raccord (2) selon l'une des revendications précédentes,
**caractérisé en ce**
**que** l'élément de fixation (4) est disposé sur l'élément d'appui (20).

5. Raccord (2) selon l'une des revendications précédentes,
**caractérisé en ce**
**que** l'élément d'appui (20) repose sur la pièce de montage (5) dans la position de prémontage.

6. Raccord (2) selon l'une des revendications précédentes,
**caractérisé en ce**
**que** l'élément de fixation (4) forme un mécanisme d'encliquetage pour la pièce de montage (5), lequel agit sur l'ouverture traversante (51) de la pièce de montage (5) et/ou
**que** l'élément de fixation (4) forme un mécanisme d'encliquetage pour l'élément de support (20).

7. Raccord (2) selon l'une des revendications précédentes,
**caractérisé en ce**
**que** l'élément de fixation (4) présente au moins un crochet d'encliquetage (41, 42).

8. Raccord (2) selon l'une des revendications précédentes,
**caractérisé en ce**
**que** l'élément de fixation (4) présente au moins un évidement (43, 44) pour les doigts.

9. Raccord (2) selon les revendications 7 et 8,
**caractérisé en ce**
**que** l'évidement (43 ou 44) pour les doigts est disposé au-dessus du crochet d'encliquetage (41 ou 42).

10. Raccord (2) selon la revendication 7 ou 9,
**caractérisé en ce**
**que** l'élément d'appui (20) présente au moins un renfoncement (31 ou 32) permettant de recevoir le crochet d'encliquetage (41 ou 42).

11. Raccord (2) selon l'une des revendications précédentes,
**caractérisé en ce**
**que** l'élément de fixation (4) présente deux crochets d'encliquetage (41, 42) disposés sur des côtés opposés du cadre (40).

12. Raccord (2) selon la revendication 6,
**caractérisé en ce**
**que** le raccord (2) présente un mécanisme permettant de réduire une force de maintien du mécanisme d'encliquetage pour la pièce de montage (5).

13. Raccord (2) selon l'une des revendications précédentes,
**caractérisé en ce**
**que** l'élément de fixation (4) est une pièce en matière plastique.

14. Raccord (2) selon l'une des revendications précédentes,
**caractérisé en ce**
**que** l'élément de mise en prise arrière (27) peut pivoter par rapport à l'élément d'appui (20) entre une position d'insertion permettant l'insertion dans la fente de rail (69) et une position d'ancrage permettant la mise en prise par l'arrière de la fente de rail (69).

15. Agencement de fixation comportant une pièce de montage (5) présentant une ouverture traversante (51), comportant un raccord (2) selon l'une des revendications précédentes permettant de raccorder la pièce de montage (5) à un rail profilé (6) présentant une fente de rail (69), et de préférence comportant également ledit rail profilé (6).
